# EUROPEAN PATENT APPLICATION

(11) **EP 2 557 350 A2**
(43) Date of publication of application: **13.02.2013**
(21) Application number: 12178525.7
(22) Date of filing: 30.07.2012
(51) Int. Cl.: F21L 14/04, F21S 9/04, F21V 21/15, F21V 21/22, F21V 23/04

(54) **Mobile light tower**

(30) Priority: 09.08.2011 GB 201113704
(71) Applicant: Jones, Paul, Dudley, West Midlands DY1 2GL (GB); Timmins, David, Dudley, West Midlands DY1 2GL (GB)
(72) Inventor: Jones, Paul, Dudley, West Midlands DY1 2GL (GB); Timmins, David, Dudley, West Midlands DY1 2GL (GB)
(74) Representative: Lincoln, Ben

(57) **Abstract**

A mobile light tower (1) comprising a base unit (2) and at least one light (4a, 4b) connected to the base unit by an extendable mast (5), the base unit including a power source for powering the at least one light, the extendable mast (5) adapted to move between a retracted position and an extended position, wherein the mobile light tower includes a controller (6) and a wind speed sensor (7), the controller adapted to lower the extendable mast to an intermediate position, between the retracted position and extended position, when the wind speed sensor (7) determines that a predetermined wind speed is exceeded.

## Description

This invention relates to a mobile light tower. It also relates to a controller for a mobile light tower.

Mobile light towers comprise a base, an extendable mast and a light rig to which the lighting units are mounted. The base typically comprises a power source mounted on a wheeled trailer, which can be towed by a vehicle. The power source typically comprises a generator, such as a diesel engine that powers an alternator for generating the electricity to power the lighting units. The light rig is connected to the base by the extendable mast, which can raise the light rig to a predetermined height above the base.

A problem with mobile light towers is that they can be unstable in high winds. The mobile light tower may be tipped over by winds which can cause damage to the light tower and also cause serious injury to people nearby. Further, when operating in windy conditions a large area around the light tower can be potentially hazardous because the extendable mast can be of a substantial height and therefore the light rig can strike the ground far from the base. It is known to improve the stability of mobile light towers using outrigger jacks that extend from the base to provide additional support.

According to a first aspect of the invention we provide a mobile light tower comprising a base unit and at least one light connected to the base unit by an extendable mast, the base unit including a power source for powering the at least one light, the extendable mast adapted to move between a retracted position and an extended position, wherein the mobile light tower includes a controller and a wind speed sensor, the controller adapted to lower the extendable mast when the wind speed sensor determines that a predetermined wind speed is exceeded. The controller may lower the mast to an intermediate position, between the retracted position and extended position.

This is advantageous because the mobile light tower can be made safe in windy conditions by lowering the extendable mast. It will be appreciated that the mobile light tower is less susceptible to the effects of wind when the extendable mast and light are lowered. This means that the mobile light tower can react to adverse weather conditions that could pose a safety risk, resulting in the lowering of the extendable mast in high winds. Thus, the controller improves the safety of operating the mobile light tower.

Preferably the mobile light tower comprises a light rig, which includes the at least one light and provides a mounting point between the light(s) and the extendable mast. This is advantageous as the light rig provides a convenient mounting point for elements mounted at the top of the mast.

Preferably the extendable mast is telescopic. The extendable mast may be raised and lowered by a hydraulic drive unit or a winch system.

Preferably the wind speed sensor at mounted at the top of the extendable mast, distal the base unit. Preferably, the wind speed sensor is connected to the light rig. This is advantageous as the wind speed sensor can measure the wind speed experienced by the light(s) at its elevated position.

The controller may be adapted to lower the extendable mast to a lower intermediate position, between the retracted position and the extended position, when the predetermined wind speed is detected by the wind speed sensor. Further, the controller may be adapted to lower the extendable mast from the intermediate position when the wind speed sensor determines a second predetermined wind speed is exceeded. This is advantageous as it ensures that the mobile light tower operates safely and also can remain operational. In particular, when in the fully extended position, the lighting rig will typically experience the highest winds. A given wind force acting on a fully extended mast also applies the most leverage to the base unit. Thus, the controller can lower the light rig to a lower position where the wind may be slower and also the lighting rig applies less leverage to the base unit. If the wind persists and the second predetermined wind speed is exceeded, the extendable mast may be lowered further to the fully retracted position.

The second predetermined wind speed may be the same as or higher than the predetermined wind speed. This is advantageous as the controller may determine that safe operating conditions are still not experienced at the lower position and therefore lower the extendable mast further. Also, the mobile lighting tower may be able to operate safely in higher wind speeds when in the lower position and therefore the second predetermined wind speed may be higher than the predetermined wind speed. This allows the mobile lighting tower to be operational and safe during windy conditions.

The lower intermediate position may be determined based on the wind speed detected by the wind speed sensor. This is advantageous as the controller can lower the light further when the wind speed is higher to maintain a stable mobile lighting tower.

The controller may be arranged to determine that the predetermined wind speed and/or second predetermined wind speed has been exceeded when the wind speed sensor detects a wind speed in excess of the predetermined speed for a preset amount of time. This is advantageous as the controller can distinguish between short gusts of wind that do not pose a safety concern and a sustained wind speed which may unsettle the mobile light tower.

The mobile light tower may also include an inclination sensor arranged to measure the inclination of the base unit. The controller may be arranged to check whether or not the base unit is level before allowing the extendible mast to be raised. Alternatively or in addition, the controller may be adapted to lower the extendable mast when a change in the inclination is detected by the inclination sensor. This is advantageous as the controller can determine if the base unit is located on level ground, being moved or unsettled by high winds or has moved due to unstable ground. The controller can use information from the wind speed sensor and the inclination sensor to determine when and may be how much to raise and lower the extendable mast to maintain safety and operation of the light.

The base unit may also include a movement sensor to detect how much the wind acting on the light is affecting the base unit to determine whether or not to lower the extendable mast.

The light rig may be arranged to reposition the light or lights depending on the height of the extendable mast. This is advantageous as if the lights were in a fixed position when the extendable mast was lowered they would illuminate a smaller area at ground level. The light rig is thus able to reposition the lights when the extendable mast is lowered to maintain a particular area of illumination. This may involve rotating the light or lights outwards (away from the mast) when the extendable mast is lowered and rotating the lights inward (towards the mast) when the extendable mast is raised.

According to a second aspect of the invention we provide a controller for a mobile light tower, the mobile light tower being of the type comprising a base unit and at least one light connected to the base unit by an extendable mast, the base unit including a power source for powering the at least one light, the extendable mast adapted to move between a retracted position and an extended position,
wherein the controller includes a wind speed sensor and is adapted to lower the extendable mast when the wind speed sensor determines that a predetermined wind speed is exceeded. The controller may lower the mast to an intermediate position, between the retracted position and extended position.

It will be appreciated that the optional features above can apply equally to the controller in so far as it provides control of the mobile light tower.

There now follows by way of example only a detailed description of the present invention with reference to the accompanying drawings, in which;
Figure 1 shows a side view of an embodiment of the mobile light tower with the extendable mast in the extended position;
Figure 2 shows a side view of an embodiment of the mobile light tower with the extendable mast in the retracted position; and
Figure 3 shows an embodiment view of a controller.

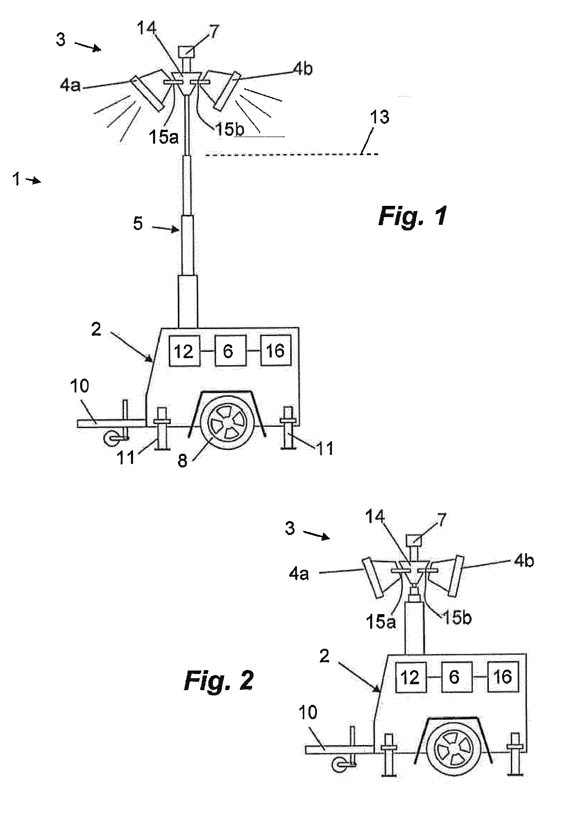

Figure 1 shows an embodiment of a mobile light tower 1 for use on building sites, roadworks or car parks, for example. The mobile light tower is set up to provide illumination of an area so that a workforce can operate at night or car park users can find their cars more easily. It will be appreciated that these are only examples and the mobile light tower has many other uses.

The mobile light tower 1 comprises a base unit 2 and a light rig 3 including two lights 4a and 4b. More or less lights could be provided. The light rig 3 is connected to the base unit 2 by an extendable mast 5. The base unit 2 includes a power source comprising a diesel powered generator for generating electricity for powering the lights 4a, 4b. The extendable mast 5 is adapted to move between a retracted position (shown in Figure 2) and an extended position (shown in Figure 1). The mobile light tower 1 includes a controller 6 and wind speed sensor 7, the controller 6 adapted to lower the extendable mast 5 when the wind speed sensor 7 measures that a predetermined wind speed is exceeded.

The base unit 2 comprises a wheeled trailer having wheels 8 and a towing connector 10 for connecting to a vehicle. The generator is mounted to the wheeled trailer and is of conventional design. The base unit 2 further includes outrigger jacks 11 that extend substantially horizontally outward from the base unit and contact the ground to provide additional stability for the base unit.

The extendable mast 5 extends from a top surface of the base unit 2 and comprises a plurality of telescoped sections. The extendable mast 5 is raised and lowered by a mast motor 12 controlled by the controller 6. The mast motor 12 comprises a hydraulic system to telescope the extendable mast 5 to its extended position and to withdraw it to its retracted position. The mast motor may alternatively comprise a winch. The mast motor 12 can also move the extendable mast to positions between the retracted position and the extended position. The dashed line 13 represents the height of the light rig 3 when the extendable mast 5 is in an intermediate position. The extended position is typically around nine metres above the ground. The intermediate position may be between three and nine metres, such as 4, 5, 6, 7 or 8 metres or within ranges thereof. Alternatively, the intermediate position may be defined as a fraction of the fully extended height, such as 3/4, 2/3 or 1/2 the fully extended height or ranges thereof.

The light rig 3 comprises a hub 14 connected atop the extendable mast 5. The hub includes brackets 15a and 15b to connect the lights 4a and 4b to the hub. The lights 4a and 4b comprise a metal halide lamp, as is known in the art. The hub 14 also provides a mounting point for the wind speed sensor 7. The wind speed sensor 7 is arranged to relay its measurement data to the controller 6 either wirelessly or through a communication line that runs along the extendable mast 5. The brackets 15a, 15b may include means to reposition the direction that the lights 4a and 4b point. This is advantageous as the lights 4a and 4b can be positioned such that the ground area illuminated by the mobile light tower remains substantially constant with changes in height of the extendable mast 5 and, in particular, when the extendable mast 5 is moved between the extended position and the intermediate position. As can be seen in Figure 2 compared to Figure 1, the angle of the lights has been adjusted outwardly with the reduction in the height of the extendable mast 5.

Figure 1 shows the mobile light tower 1 with the extendable mast 5 in the extended position. The extended position is typically the full extension of the extendable mast. Figure 2 shows the extendable mast 5 in the retracted position, which is typically fully retracted such that the mobile light tower is ready for transport.

In use, the mobile light tower 1 is positioned where it is needed, typically by towing it to the position. It is unhitched from the vehicle and the outrigger jacks 11 are extended and lowered. The extendable mast 5 is extended from the retracted position, which is adopted during transport of the mobile light tower 1, to the fully extended position. The mobile light tower can therefore provide light to the required area. The controller 6 is arranged to monitor the wind speed detected by the wind speed detector 7. If the wind speed is lower that a predetermined speed, the extendable mast is maintained in the extended position. In this embodiment the predetermined speed is 70 miles per hour (31 metres per second). If the controller 6 measures a wind speed in excess of the predetermined speed (which may be the highest wind speed for safe operation) it is arranged to actuate the mast motor 12 to lower the extendable mast. This reduces the risk of the mobile lighting tower toppling over.

In an alternative embodiment, the controller 6 is arranged to determine that the predetermined wind speed has been exceeded if the wind speed sensor 7 measures a wind speed in excess of the predetermined speed for a predetermined period of time, which in this embodiment is 10 seconds. Once the controller 6 determines that this has occurred, the extendable mast is lowered.

In the above embodiments, the controller 6 is adapted to lower the extendable mast 5 to an intermediate position. The controller 6 is programmed to lower the extendable mast to the intermediate position and to continue monitoring the wind speed using the wind speed sensor 7 at the intermediate position. If the controller 6 determines that the wind speed is above a second predetermined speed (or above the second predetermined speed for a predetermined period of time) the controller 6 may actuate the mast motor 12 to lower the extendable mast 5 further or fully to the retracted position. The second predetermined speed in this example is the same as predetermined speed. However, as the intermediate position is lower than the extended position, the second predetermined speed may be higher than the predetermined speed because wind catching the light rig 3 will usually apply less leverage to the base unit 2 when the extendable mast 5 is lower. For example, the second predetermined speed may be 80 miles per hour (35.8 metres per second).

In a further embodiment, the controller 6 is also arranged to receive information from an inclination or movement sensor 16. The inclination sensor may measure the inclination of the base unit 2 to the ground to determine if it is being tipped over by high winds. Thus, when the controller detects an inclination of more than two degrees, for example, it may lower the mast. Similarly the movement sensor 16 may measure how much the base unit is being moved by the wind to see if the mobile lighting tower 1 is being unsettled by the wind. The movement sensor may be an accelerometer and if they measure acceleration above a threshold, the controller may lower the mast. The controller 6 may use information from the wind speed sensor and inclination/movement sensor 16 when decided when and by how much to lower the extendable mast 5. The controller 6 may use the inclination/movement sensor independently of the wind speed sensor to decide when to lower the mast. In fact, the use of an inclination sensor/movement sensor instead of the wind sensor may form an aspect of the invention.

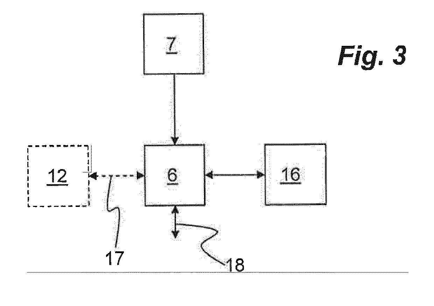

Figure 3 shows a diagram of a controller 6, with wind speed sensor 7 and inclination/movement sensor 16. The controller 6 may be retrofitted to existing mobile lighting towers to provide an additional safety feature. The controller is shown having a connection 17 to a mast motor of the mobile lighting tower that can control the height of the extendable mast 5. It will be appreciated that the controller may have programming port 18 to receive additional information to calibrate the controller to the mobile light tower 1. For example, the output necessary to actuate the mast motor 12 may be programmed via the programming port 18. Further, the controller 6 may be arranged to receive further sensor inputs or an extendible mast position signal, so that the position of the mast can be precisely controlled.

It will be appreciated that the predetermined wind speed and second predetermined wind speed may be any speed appropriate to ensure the stability and safety of the mobile light tower. For conventional mobile light towers the safe operating speed when the mast is at full extension is between 65 and 75 miles per hour (29 to 33.5 metres per second) and therefore the predetermined speed may be set to this value. When the mast 5 is in the intermediate position 13, the second predetermined speed may be the same or 5%, 10% or 15% higher or more, for example. The controller may be adapted to fully lower the extendible mast when the predetermined wind speed is detected. The height of the intermediate position may be determined from the wind speed detected by the wind speed sensor. For example, the controller may include a table of different mast heights and the safe wind speed for operating the light tower at that height. When the wind speed sensor detects a wind speed above the predetermined amount or second predetermined amount, the controller 6 may refer to the look up table to identify the height of the intermediate position for continued operation at the wind speed detected. Alternatively, the amount the mast is lowered may be a function of the wind speed detected.

## Claims

1. A mobile light tower comprising a base unit (2) and at least one light (4a, 4b) connected to the base unit by an extendable mast (5), the base unit (2) including a power source for powering the at least one light, the extendable mast adapted to move between a retracted position and an extended position, wherein the mobile light tower (1) includes a controller (6) and a wind speed sensor (7), the controller adapted to lower the extendable mast to an intermediate position, between the retracted position and extended position, when the wind speed sensor determines that a predetermined wind speed is exceeded.

2. A mobile light tower as defined in claim 1, in which the mobile light tower comprises a light rig (3), which includes the at least one light and provides a mounting point between the light(s) and the extendable mast (5).

3. A mobile light tower as defined in claim 1 or claim 2, in which the extendable mast (5) is telescopic.

4. A mobile light tower as defined in any preceding claim, in which the wind speed sensor (7) at mounted at the top of the extendable mast, distal the base unit.

5. A mobile light tower as defined in claim 4 when dependent on claim 2, in which the wind speed sensor (7) is connected to the light rig.

6. A mobile light tower as defined in claim 1, in which the controller is adapted to lower the extendable mast from the intermediate position when the wind speed sensor (7) determines a second predetermined wind speed is exceeded.

7. A mobile light tower as defined in claim 6, in which the second predetermined wind speed is the same as or higher than the predetermined wind speed.

8. A mobile light tower as defined in any preceding claim, in which the lower intermediate position is determined based on the wind speed detected by the wind speed sensor (7).

9. A mobile light tower as defined in any preceding claim, in which the controller(6) is arranged to determine that the predetermined wind speed and/or second predetermined wind speed has been exceeded when the wind speed sensor detects a wind speed in excess of the predetermined speed for a preset amount of time.

10. A mobile light tower as defined in any preceding claim, in which the mobile light tower (1) includes an inclination sensor (16) arranged to measure the inclination of the base unit.

11. A mobile light tower as defined in claim 10, in which the controller (6) is arranged to check whether or not the base unit is level before allowing the extendible mast to be raised.

12. A mobile light tower as defined in any preceding claim, in which the controller is adapted to lower the extendable mast when a change in the inclination is detected by the inclination sensor (6).

13. A mobile light tower as defined in any preceding claim, in which the base unit (2) includes a movement sensor (16) to detect how much the wind acting on the light is affecting the base unit to determine whether or not to lower the extendable mast (5).

14. A mobile light tower as defined in claim 2, in which the light rig is arranged to reposition the light or lights depending on the height of the extendable mast (5).

15. A controller for a mobile light tower, the mobile light tower being of the type comprising a base unit and at least one light connected to the base unit by an extendable mast, the base unit including a power source for powering the at least one light, the extendable mast adapted to move between a retracted position and an extended position,
wherein the controller includes a wind speed sensor and is adapted to lower the extendable mast to an intermediate position, between the retracted position and extended position, when the wind speed sensor determines that a predetermined wind speed is exceeded.
